# EUROPEAN PATENT APPLICATION

(11) **EP 4 640 330 A1**
(43) Date of publication of application: **29.10.2025**
(21) Application number: 24172764.3
(22) Date of filing: 26.04.2024
(51) Int. Cl.: B21D 5/00, B21D 5/08, B21D 5/16, B21D 11/10, B21D 19/12, B21D 22/02, B21D 39/02, B21D 39/03, B21D 47/01, B21D 53/88

(54) **METHOD FOR MANUFACTURING AN OPERATING BEAM OF A VEHICLE SUNSHADE ASSEMBLY**

(71) Applicant: Inalfa Roof Systems Group B.V., 5807 GW Oostrum (NL)
(72) Inventor: van Boxtel, Edwin, 5807 GW Oostrum (NL); Nellen, Marcel, 5807 GW Oostrum (NL); Custers, Jur, 5807 GW Oostrum (NL); Ten-Jet-Foei, Suyanto, 5807 GW Oostrum (NL)
(74) Representative: De Vries & Metman

(57) **Abstract**

The invention relates to a method of manufacturing an operating beam of a sunshade assembly having a variable height while controlling the width in manufacturing. The invention further relates to an operating beam manufactured as such and the use of said operating beam in a vehicle.

## Description

The present invention relates to a method for manufacturing an operating beam of a sunshade assembly having a variable height while controlling the width in manufacturing. The invention further relates to an operating beam manufactured as such and the use of said operating beam in a vehicle.

### BACKGROUND

The invention relates to a roof system for a vehicle including a sunshade assembly, which comprises a flexible sunscreen having opposed longitudinal edges and opposed transversal edges, a winding shaft carrying a rotatable winding roller configured for winding and unwinding the sunscreen at a first one of its transversal edges, the winding roller being provided with an internal spring connected between the winding roller and the winding shaft and being preloaded to wind the sunscreen thereon, an operating beam connected to the second one of the transversal edges of the sunscreen; two drive parts extending along and capable of a movement parallel to the longitudinal edges of the sunscreen, wherein the drive parts are driven by a corresponding drive and are connected to opposite ends of the operating beam for moving it to wind and unwind the sunscreen along a pair of guides extending in the longitudinal direction.

The operating beam typically is a rolled profile with a constant width and height in the transversal direction, generally extending from a left-hand side of the vehicle to a right-hand side of the vehicle. Sometimes the operating beam has a slight curvature following the contour of the roof lining at the front end of the vehicle. The operating beam may therefore have a wider width at the middle of the operating beam compared to either end of the operating beam.

With the increasing importance of maximizing head space in a vehicle and reducing the size and weight of the roof system including a sunshade assembly, the height of the sunshade assembly guides along the longitudinal direction is preferably minimized.

However, reducing the height of the guides poses challenges concerning the dimensions of the operating beam. Especially the middle of the operating beam should have a sufficient stiffness to counter natural frequency and misuse issues, to improve gravity endurance, limit permanent deformation and to properly fix the fabric of the sunscreen and slide shoes to the operating beam. To have sufficient stiffness, the operating beam typically has a large height pushing down the sunscreen fabric and the complete guide section into the headroom area of the vehicle.

A known solution is to shave-off or cut-off a part of the top of the operating beam at both ends of the beam, leading to unwanted waste material from the removed material. Another known solution is to press down the ends of the operating beam to flatten the ends, however creating a wider operating beam at the flattened ends thus having a narrower middle section of the operating beam than both the ends.

### SUMMARY OF INVENTION

It is therefore an object of the present invention to provide an operating beam for a sunshade assembly of a vehicle, wherein the operating beam has a variable height with a controlled width offering both a smaller package at the sides and offering sufficient stiffness in the middle, without creating waste material.

The object is achieved by providing a method for manufacturing an operating beam of a sunshade assembly comprising the steps of providing a first metal plate part extending in a transversal direction, folding the first metal plate part along a first side in the transversal direction thereby creating a rolled section for fixating a sunscreen, folding the first metal plate part along a second side in the transversal direction thereby creating an upstanding portion opposed to the rolled section, providing a second metal plate part substantially parallel to the plane of the first metal plate part, stamping an end portion of the second metal plate part towards the first metal plate part, wherein the stamped portion of the second metal plate flows within the perimeter between the rolled section and the upstanding portion of the first metal plate part and wherein the distance between the rolled section and the upstanding portion of the first metal plate part is maintained constant stamping.

By folding the first metal plate part along the first and second side in the transversal direction, creating a rolled section and upstanding portion, the distance between both is being determined and as such the width of the folded first metal plate part is being determined. The distance, and as such the width, may be constant along the transversal direction meaning that the distance between the rolled section and the upstanding portion is the same on any given point in the transversal direction, or at least close to the same when taking into account processing tolerances. The distance, and as such the width, may also vary in such a way that the distance is larger in the middle section of the folded first metal plate than the distance towards or at an end section of the folded first metal plate.

With this distance being determined, the second metal plate part may be provided substantially parallel to the plane of the first metal plate part and stamped at an end portion towards the first metal plate wherein the stamped portion will only flow out within the inner perimeter of the rolled section and upward portion of the first metal plate part. Thus, the stamped portion cannot flow wider than the pre-determined width of the first metal plate part.

During stamping, the distance may be secured by, for instance, clamping the first metal plate part ensuring the distance cannot be widened during stamping. Alternatively, the stamping force may be controlled to prevent widening of said distance.

As the stamped portion is lower than the non-stamped portions, the middle of the operating beam is thus higher than the end portions. The degree or amount of curvature of the height profile may be chosen based upon the curvature of the roof and/or the middle beam of the vehicle in which the operating beam will be used.

Additionally, both the first metal plate part and the second metal plate part may be further fixed together on one or more positions along the transversal direction by, for instance, clinching or spotwelding to create a strong connection between both metal plate parts.

This leads to an operating beam that has a stamped end portion, wherein the height at the end portion is thus lower than the middle portion and the width of the operating beam is kept the same as before stamping, thus achieving the object of the invention.

In an embodiment, the first metal plate part and the second metal plate part are both parts of a single piece of a metal plate. When providing both metal plate parts as a single piece of a metal plate, the second metal plate part may be in connection with the upstanding portion meaning the metal plate is first folded to create the rolled portion and the upstanding portion, thus forming the first metal plate part, and the metal plate is further folded from the upstanding portion to create the second metal plate part substantially parallel to the first metal plate part.

In an embodiment, the first metal plate part and the second metal plate part are both separate pieces of a metal plate. When providing both metal plate parts as individual, separate, pieces of metal plates, the second metal plate part may have two flanges so that, when providing the second metal plate part substantially parallel to the first metal plate part, the flanges are situated within the perimeter of the rolled section and the upward portion of the first metal plate part. The flanges may flow out within said perimeter upon stamping the second metal plate part.

In an embodiment, the distance between the rolled section and the upstanding portion is constant along the transversal direction. As such, the distance between the rolled section and the upstanding portion is the same on any given point in the transversal direction, or at least substantially the same taking into account processing tolerances. This creates a straight operating beam in the transversal direction, preferred for usage within vehicles having a straight headliner section at a front side of the car as to create an optimal fit between the operating beam and the headliner section.

In an embodiment, the distance between the rolled section and the upstanding portion in the middle of the operating beam is larger than at an end portion of the operating beam along the transversal direction. As such, the distance between the rolled section and the upstanding portion varies in such a way that the operating curve curves outwards in the middle portion. It may curve outwards on one side of the operating beam in the transverse direction, or curve outwards on both sides of the operating beam in the transverse direction. This curvature is preferred for usage within vehicles having a curved headliner section at a front side of the car as to create an optimal fit between the operating beam and the headliner section.

In an embodiment, the first metal plate part and second metal plate part are clinched or spot welded together at one or more positions along the transversal direction. This creates a strong fixation between both metal plate parts. Clinching may be achieved by using a Tox connection.

In an aspect of the invention, an operating beam for a sunshade assembly is provided comprising a first metal plate part extending in a transversal direction, folded along a first side in the transversal direction thereby having a rolled section for fixating a sunscreen and further folded along a second side in the transversal direction thereby having an upstanding portion opposed to the rolled section, a second metal plate part substantially parallel to the plane of the first metal plate part having an end portion stamped towards the first metal plate part, wherein the stamped portion of the second metal plate is situated within the perimeter between the rolled section and the upstanding portion of the first metal plate part and wherein the distance between the rolled section and the upstanding portion of the first metal plate part before and after stamping the end portion of the second metal plate is the same.

Both folded portions of the first metal plate part together determine the width of the first metal plate part, and with the second metal plate part being provided within the perimeter of both folded portions, the stamped portion of the second metal plate part is not wider than the pre-determined width of the first metal plate part. This width may be secured during the manufacturing of the operating beam by, for instance, clamping the first metal plate part during stamping or, alternatively, controlling the stamping force. If the width was not properly secured by any suitable means, the material of the first and second metal plate part will expand beyond the determined width leading to an undesired resulting shape of the operating beam. For example, if the width along the operating beam was desired to be constant, creating a straight operating beam, the end portions now are wider than the desired width thus leading to an operating beam no longer straight if the width was not properly secured.

As the stamped portion is lower than the non-stamped portions, the middle of the operating beam is thus higher than the end portions. This creates a curvature along the height profile of the operating beam. The degree or amount of curvature of the height profile may be chosen based upon the curvature of the roof and/or the middle beam of the vehicle in which the operating beam will be used.

As such, the curvature at the middle section of the operating beam may be different from the curvature at the end portions of the operating beam. For example, the middle section may be arching outwards while the end portions are substantially flat, or the middle section is substantially flat while the end portions are arching inwards. Alternatively, the curvature at both the middle section and the end portions of the operating beam may be the same. For example, the operating may have a continues curve from the first end portion towards the second end portion.

Thus, an operating beam achieving the object of the invention is provided.

In an embodiment, the first metal plate part and the second metal plate part are both parts of a single piece of a metal plate. The second metal plate part may thus be in connection with the upstanding.

In an embodiment, the first metal plate part and the second metal plate part are both separate pieces of a metal plate. As such, both metal plate parts are individual, separate, pieces of metal plates wherein the second metal plate part may have two flanges situated within the perimeter of the rolled section and the upward portion of the first metal plate part.

In an embodiment, the distance between the rolled section and the upstanding portion is constant along the transversal direction. As such, the distance between the rolled section and the upstanding portion is the same on any given point in the transversal direction, or at least substantially the same taking into account processing tolerances. This creates a straight operating beam in the transversal direction, preferred for usage within vehicles having a straight headliner section at a front side of the car as to create an optimal fit between the operating beam and the headliner section.

In an embodiment, the distance between the rolled section and the upstanding portion in the middle of the operating beam is larger than at an end portion of the operating beam along the transversal direction. As such, the distance between the rolled section and the upstanding portion varies in such a way that the operating curve curves outwards in the middle portion. It may curve outwards on one side of the operating beam in the transverse direction, or curve outwards on both sides of the operating beam in the transverse direction. This curvature is preferred for usage within vehicles having a curved headliner section at a front side of the car as to create an optimal fit between the operating beam and the headliner section.

In an embodiment, the first metal plate part and second metal plate part are clinched or spot welded together at one or more positions along the transversal direction. This creates a strong fixation between both metal plate parts. Clinching may be achieved by using a Tox connection.

In yet another aspect to the invention, an operating beam according to any of the above embodiments is used as a part of a sunshade assembly in a vehicle. A sunscreen may be attached to the operating beam within the rolled section of the operating beam when used in a sunshade assembly. The sunshade assembly may be a further part of a vehicle sunroof system.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1 illustrates a perspective view of an example of an operating beam;
FIG. 2A and 2B illustrate a cross-section view of an example of an operating beam;
FIG. 3A and 3B illustrate a cross-section view of an example of an operating beam;
FIG. 4 illustrates a perspective view of another example of an operating beam;
FIG. 5A to 5C illustrate a cross-section view of another example of an operating beam;
FIG. 6 illustrates a perspective view of another example of an operating beam;
FIG. 7 illustrates a cross-sectional view of spot-welding of an operating beam;
FIG. 8A to 8D illustrate a cross-section view of another example of an operating beam;
FIG. 9 illustrates a cross-sectional view of another example of an operating beam;
FIG. 10 illustrates a perspective view of yet another example of an operating beam;
FIG. 11A to 11C illustrate a cross-section view of yet another example of an operating beam;
FIG. 12A and 12B illustrate a cross-section view of yet another example of an operating beam

### DETAILED DESCRIPTION

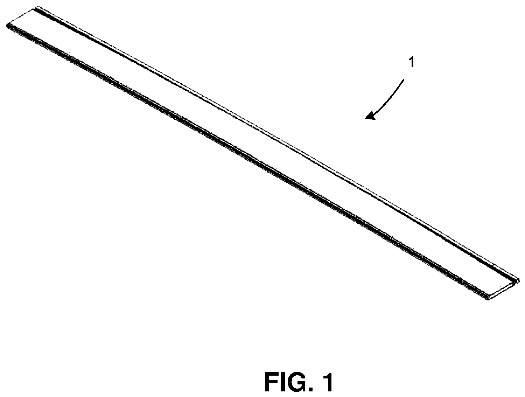

Figure 1 shows a perspective of an operating beam 1 example according to the present invention. The operating beam 1 has a fixed width along the transversal direction and a height at both end sides of the operating beam being lower than the height in the middle of the operating beam 1.

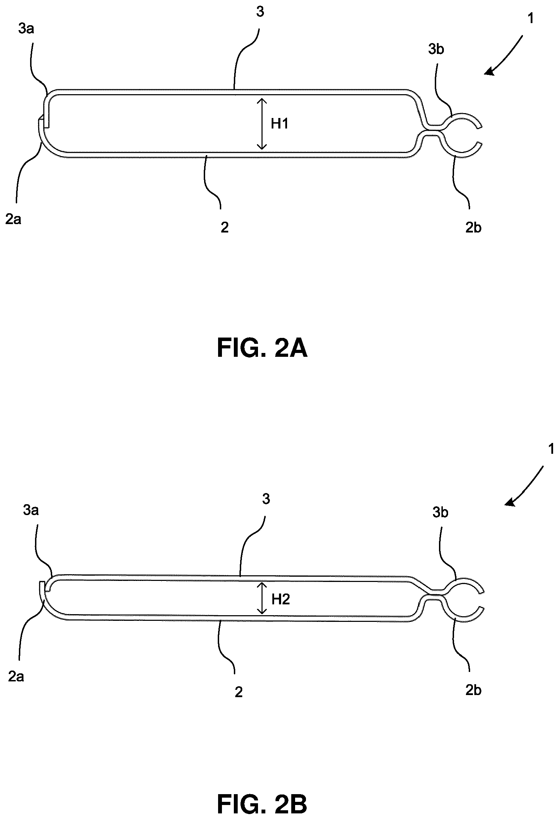

In Figures 2A and 2B, a cross-sectional view of an operating beam 1 example is shown wherein a first metal plate part 2 is provided with an upstanding portion 2a and a rolled section 2b. Parallel to the first metal plate part 2, a second metal plate part 3 is provided with a first flanged part 3a at an inner side of the upstanding portion 2a and a second flanged part 3b opposed to the rolled section 2b of the first metal plate 2.

The rolled section 2b and the second flange part 3b together form a pocket able to hold an end portion 4a of a sunscreen 4 (not shown).

Furthermore, Figure 2A shows the cross-sectional view of a middle section of the operating beam 1 with a first height H1 whereas Figure 2B shows the cross-sectional view of an end section of the operating beam 1 with a second height H2 being lower than the first height H1 while the width of the first metal plate part 2 is the same for both cross-sections.

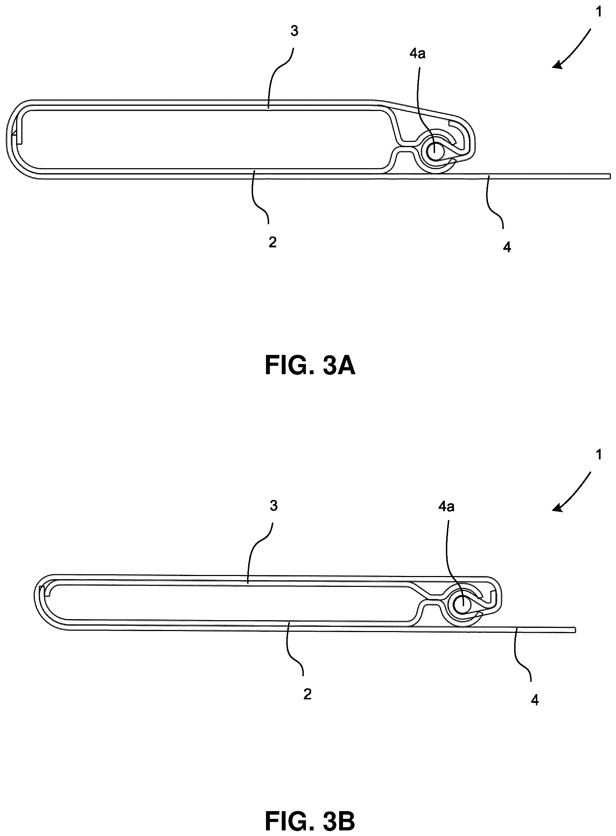

Figures 3A and 3B both show the same cross-sectional view as Figures 2A and 2B, respectively. In this set of Figures, however, an end portion 4a of a sunscreen 4 is provided within the pocket formed by rolled section 2b and second flange part 3b. The sunscreen 4 is folded over the operating beam 1.

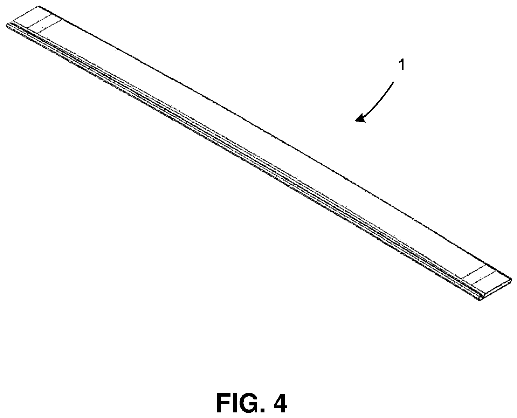

Figure 4 shows a perspective of an operating beam 1 example according to an aspect to the present invention. The operating beam 1 has a fixed width along the transversal direction and a height at both end sides of the operating beam being lower than the height in the middle of the operating beam 1.

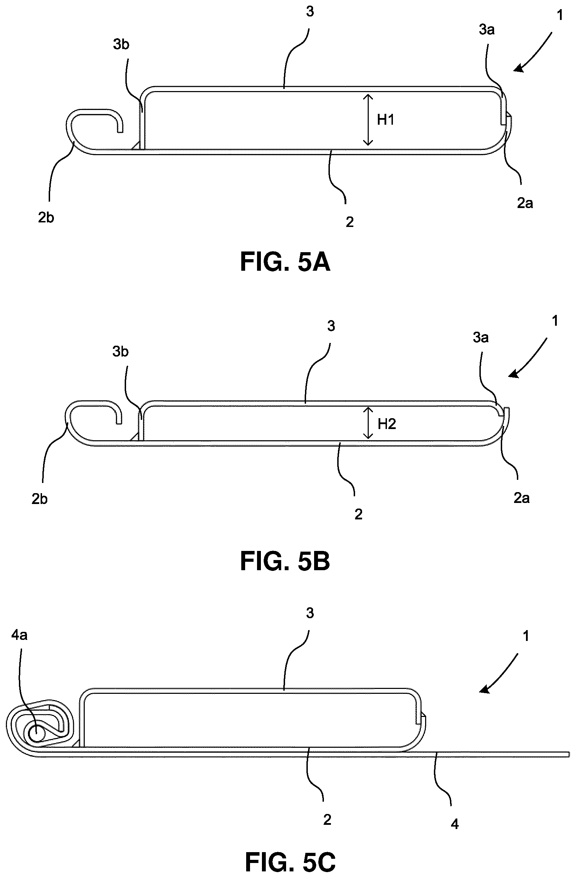

In Figures 5A to 5C, cross-sectional views of the operating beam 1 of Figure 4 are provided. The operating beam 1 comprises a first metal plate part 2 provided with an upstanding portion 2a and a rolled section 2b.

Parallel to the first metal plate part 2, a second metal plate part 3 is provided with a first flanged part 3a at an inner side of the upstanding portion 2a and a second flanged part 3b provided on an inner side to the rolled section 2b of the first metal plate 2.

The rolled section 2b and the second flange part 3b together form a pocket able to hold an end portion 4a of a sunscreen 4 shown in Figure 5C.

Furthermore, Figure 5A shows the cross-sectional view of a middle section of the operating beam 1 with a first height H1 whereas Figure 5B shows the cross-sectional view of an end section of the operating beam 1 with a second height H2 being lower than the first height H1 while the width of the first metal plate part 2 is the same for both cross-sections.

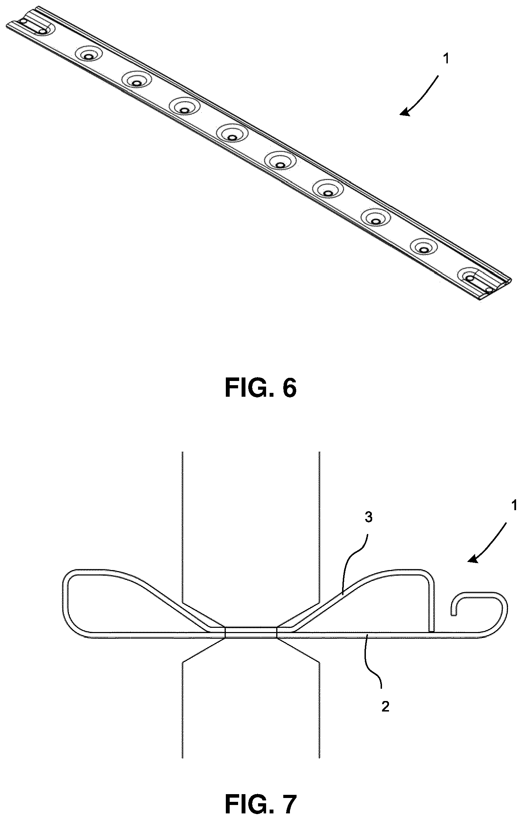

Figure 6 shows a perspective of an operating beam 1 example according to another aspect to the present invention. The operating beam 1 has a fixed width along the transversal direction and a height at both end sides of the operating beam being lower than the height in the middle of the operating beam 1. The first metal plate part 2 and second metal plate part 3 are made of a single piece of metal and fixed together by, for instance, clinching or spot welding on at least one position along the transversal direction. An example of spot welding the first metal plate part 2 and the second metal plat part 3 of the operating beam 1 is given in Figure 7.

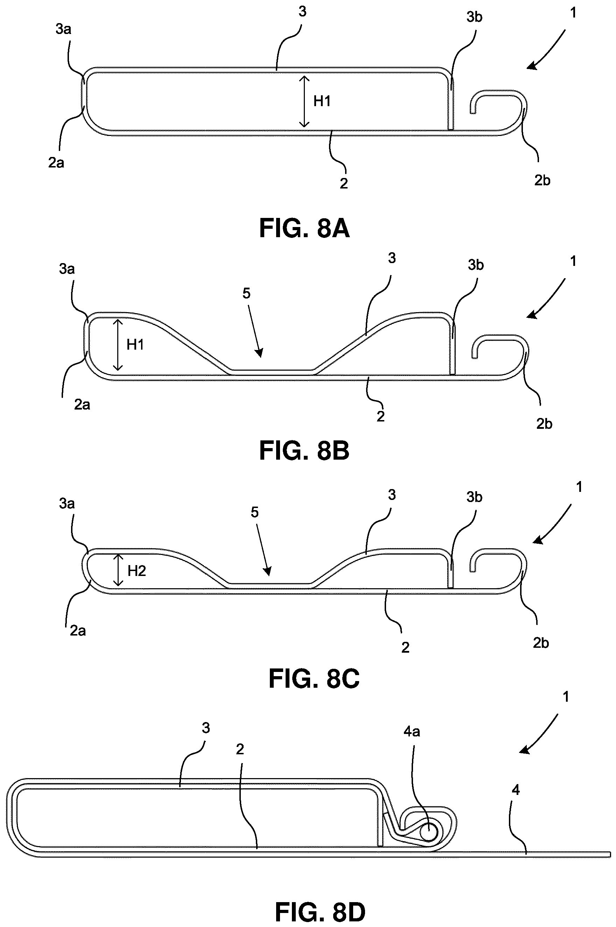

In Figures 8A to 8D a cross-section of the operating beam 1 of Figure 6 is shown wherein the first metal plate part 2 and the second metal plate part 3 are made from a single piece of metal, as shown by the continues and connected section of the upstanding portion 2a and the first flanged part 3a.

Furthermore, a rolled section 2b and a second flange part 3b are shown, together forming a pocket able to hold an end portion 4a of a sunscreen 4 as shown in Figure 8D.

Figure 8A shows the operating beam 1 at a middle position with a first height H1 without a fixation spot 5, whereas Figure 8B shows the operating beam 1 at a middle position with a first height H1 including a fixation spot 5.

Figure 8C shows the operating beam 1 at an end position with a second height H2 lower than the first height H2 and including a fixation spot 5.

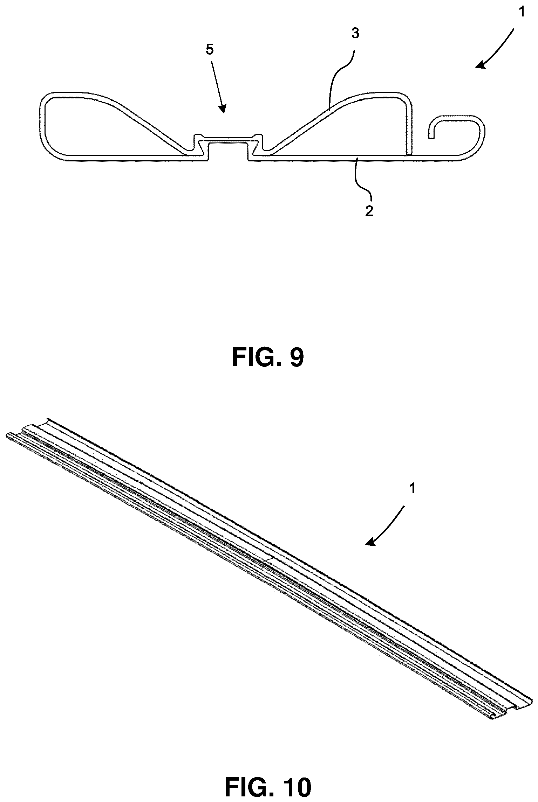

Figure 9 shows a cross-section of an operating beam 1 in accordance with Figure 6 wherein the fixation of the first metal plate part 2 and the second metal plate part 3 at fixation spot 5 is realized by means of a Tox connection.

Figure 10 shows a perspective of an operating beam 1 example according to yet another aspect to the present invention. The operating beam 1 has a fixed width along the transversal direction and a height at both end sides of the operating beam being lower than the height in the middle of the operating beam 1. The first metal plate part 2 and second metal plate part 3 are made of a single piece of metal.

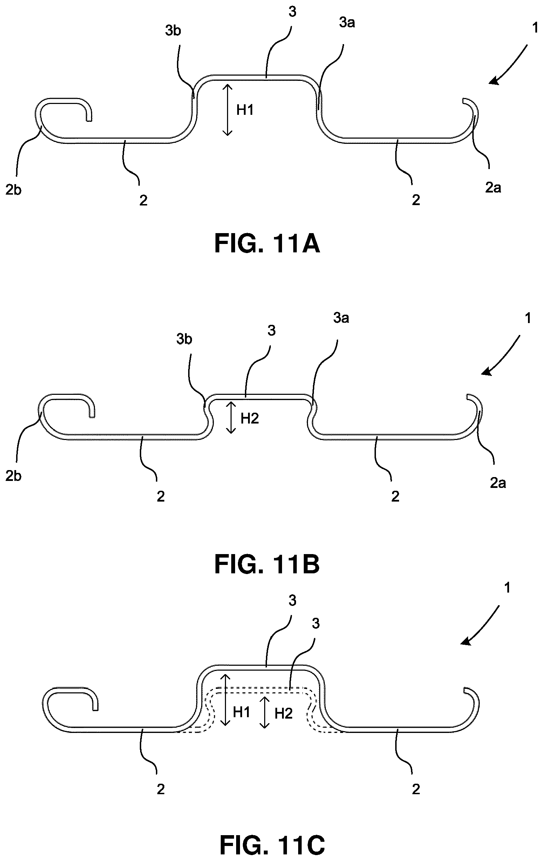

In Figures 11A to 11C, cross-sectional views of the operating beam 1 in accordance with Figure 10 are shown. The operating beam 1 comprises a first metal plate part 2 and a second metal plate part 3 made of a singular piece of metal shaped with a specific profile wherein the second metal part 3 is a curvature section in a parallel plane of the first metal plate part 2 plane.

The first metal plate part 2 comprises an upstanding portion 2a and a rolled section 2b forming a pocket for holding a sunscreen end portion 4a. The second metal plate part 3 comprises a first flanged part 3a and a second flanged part 3b.

In Figure 11A the operating beam 1 is shown without stamping the second metal plate part 3 for a middle section of the operating beam 1, whereas in Figure 11B the operating beam 1 is shown with additional stamping of the second metal plate part 3 for an end section of the operating beam 1.

The difference between the first height H1 and the second height H2 is more explicitly shown in Figure 11C, which overlays both Figures 11A and 11B with the dotted part 3 being the second metal plate part 3 as shown in Figure 11B.

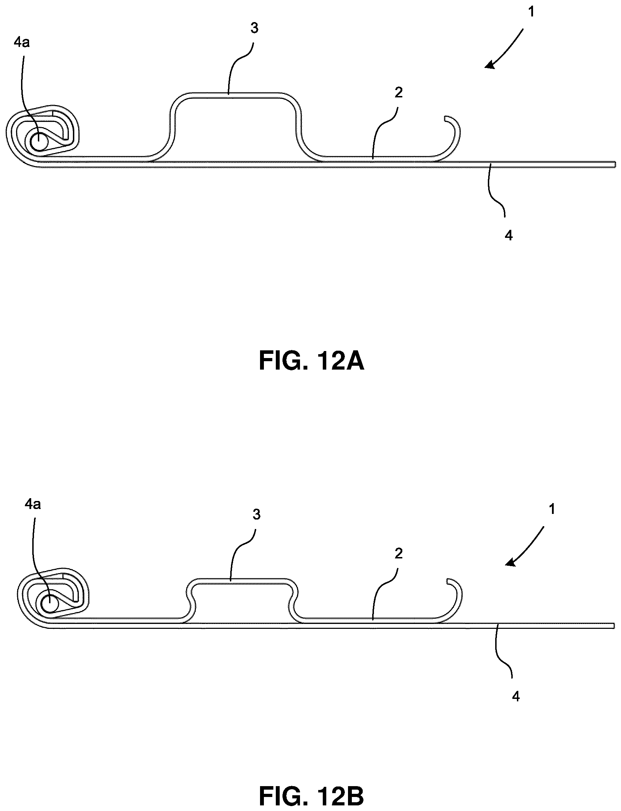

Figures 12A and 12B show the cross-sectional views of the operating beam 1 in accordance with Figure 10. The features of Figures 11A and 11B, respectively, are shown in addition with a sunscreen end portion 4a of a sunscreen 4 provided within the pocket formed by the rolled section 2b of the first metal plate part 2.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

### Reference Signs

- 1: operating beam
- 2: first metal plate part
- 2a: upstanding portion
- 2b: rolled section
- 3: second metal plate part
- 3a: first flanged part
- 3b: second flanged part
- 4: sunscreen
- 4a: sunscreen end portion
- 5: fixation spot
- H1: a first height
- H2: a second height

## Claims

1. A method for manufacturing an operating beam (1) of a sunshade assembly comprising the steps of:
- providing a first metal plate part (2) extending in a transversal direction;
- folding the first metal plate part (2) along a first side in the transversal direction thereby creating a rolled section (2b) for fixating a sunscreen (4);
- folding the first metal plate part (2) along a second side in the transversal direction thereby creating an upstanding portion (2a) opposed to the rolled section;
- providing a second metal plate part (3) substantially parallel to the plane of the first metal plate part (2);
- stamping an end portion of the second metal plate part (3) towards the first metal plate part (2);
**characterized in that** the stamped portion of the second metal plate (3) flows within the perimeter between the rolled section (2b) and the upstanding portion (2a) of the first metal plate part (2) and wherein the distance between the rolled section (2b) and the upstanding portion (2a) of the first metal plate part (2) is maintained constant during stamping.

2. The method according to claim 1, wherein the first metal plate part (2) and the second metal plate part (3) are both parts of a single piece of a metal plate.

3. The method according to claim 1, wherein the first metal plate part (2) and the second metal plate part (3) are both separate pieces of a metal plate.

4. The method according to claim 1, wherein the distance between the rolled section (2b) and the upstanding portion (2a) is constant along the transversal direction.

5. The method according to claim 1, wherein the distance between the rolled section (2b) and the upstanding portion (2a) in the middle of the operating beam (1) is larger than at an end portion of the operating beam (1) along the transversal direction.

6. The method according to claim 1, wherein the first metal plate part (2) and second metal plate part (3) are clinched or spot welded together at one or more positions (5) along the transversal direction.

7. An operating beam (1) for a sunshade assembly comprising:
- a first metal plate part (2) extending in a transversal direction, folded along a first side in the transversal direction thereby having a rolled section (2b) for fixating a sunscreen (4) and further folded along a second side in the transversal direction thereby having an upstanding portion (2a) opposed to the rolled section (2b);
- a second metal plate part (3) substantially parallel to the plane of the first metal plate part (2) having an end portion stamped towards the first metal plate part (2);
**characterized in that** the stamped portion of the second metal plate (3) is situated within the perimeter between the rolled section (2b) and the upstanding portion (2a) of the first metal plate part (2) and wherein the distance between the rolled section (2b) and the upstanding portion (2a) of the first metal plate part (2) before and after stamping the end portion of the second metal plate part (3) is the same.

8. The operating beam according to claim 7, wherein the first metal plate part (2) and the second metal plate part (3) are both parts of a single piece of a metal plate.

9. The operating beam according to claim 7, wherein the first metal plate part (2) and the second metal plate part (3) are both separate pieces of a metal plate.

10. The operating beam according to claim 7, wherein the distance between the rolled section (2b) and the upstanding portion (2a) is constant along the transversal direction.

11. The operating beam according to claim 7, wherein the distance between the rolled section (2b) and the upstanding portion (2a) in the middle of the operating beam is larger than at an end portion of the operating beam (1) along the transversal direction.

12. The operating beam according to claim 7, wherein the first metal plate part (2) and second metal plate part (3) are clinched or spot welded together at one or more positions (5) along the transversal direction.

13. Use of an operating beam (1) according to any of claims 7 to 12 as a part of a sunshade assembly in a vehicle.

14. The use according to claim 13, wherein a sunscreen (4) is attached to the operating beam (1) within the rolled section (2b) of the operating beam (1).

15. The use according to claim 13, wherein the sunshade assembly is a further part of a sunroof system.
